# FASCICULE DE BREVET EUROPEEN

(11) **EP 0 956 984 B1**
(45) Date de publication et mention de la délivrance du brevet: **08.09.2004**
(21) Numéro de dépôt: 99108784.2
(22) Date de dépôt: 03.05.1999
(51) Int. Cl.: B60G 21/05, B60G 11/23, B60G 3/14, F16F 1/387, F16F 1/50

(54) **Essieu de véchicule équipé d'éléments de suspension agissant en torsion**
Fahrzeugachse, die mit torsionswirkenden Aufhängungselementen ausgerüstet ist
Vehicle axle equiped with suspension elements acting in torsion

(30) Priorité: 13.05.1998 FR 9806276
(43) Date de publication de la demande: 17.11.1999
(73) Titulaire: Compagnie Générale des Etablissements MICHELIN-MICHELIN & CIE, 63040 Clermont-Ferrand Cedex 09 (FR)
(72) Inventeur: Foulquier, Jacques, 63118 Cebazat (FR)
(74) Mandataire: Bauvir, Jacques

(56) Documents cités:
- EP-A- 0 649 764
- WO-A-97/47486
- DE-A- 2 804 256
- DE-U- 7 331 009
- FR-A- 2 691 109
- FR-A- 2 720 801
- GB-A- 554 695
- US-A- 2 270 572
- US-A- 3 467 421
- US-A- 3 601 426
- US-A- 4 166 640
- US-A- 4 991 868

## Description

L'invention concerne les suspensions de véhicules automobiles. Plus particulièrement, l'invention se rapporte à la catégorie d'essieux qui comportent deux bras de suspension dont une extrémité supporte une fusée recevant une roue, dont l'autre extrémité est montée de façon articulée sur la caisse du véhicule par l'intermédiaire d'un arbre, qui comportent en outre une traverse reliant les deux bras de suspension, et dont l'élément principal formant la fonction "ressort de suspension" est une articulation élastique sollicitée en torsion. Les demandes de brevet WO97/47486et DE 28 04 256 décrivent des essieux de ce genre.

Un essieu pour véhicule ayant les caractéristiques du préambule de la revendication 1 est décrit dans le document WO 97/47486.

L'un des intérêts qu'il y a à utiliser des articulations élastiques élastomériques jouant le rôle de ressort de suspension, au niveau des paliers d'articulation de l'essieu par rapport à la caisse du véhicule, est de faciliter une plus grande intégration éventuelle des fonctions ressort, amortisseur et filtrage de vibrations ou de chocs. Selon les cahiers des charges à satisfaire pour les différents véhicules, ce type d'essieu peut permettre de diminuer le nombre total de pièces utilisées, notamment parce qu'on n'utilise pas de blocs de filtrage séparés, tels qu'on les rencontre couramment pour lier les essieux ou les bras de suspension à la caisse. De tels blocs élastomériques sont devenus d'usage universel et ont supplanté l'emploi de roulements, car ils sont aptes à conférer le degré de liberté requis tout en assurant un bon filtrage favorable au confort, notamment sur le plan acoustique. En outre, à ces blocs de filtrage, on peut conférer des fonctions de guidage assez élaborées en maîtrisant leur déformation sous les sollicitations de service, pour réaliser par exemple des essieux auto-directionnels, c'est à dire des essieux qui braquent légèrement le plan des roues sous le seul effet des transferts d'appui.

Dans le cas des articulations élastomériques telles qu'utilisées pour lier des bras de suspension à la caisse, leur contribution à la reprise de la charge est négligeable (de l'ordre du pour-cent). En fait, leur contribution à la reprise de la charge, faible et inhérente, n'intervient absolument pas dans le dimensionnement. Le document US 4 991 868 décrit de telles articulations. Or, si l'on cherche à conférer à de telles articulations une réelle contribution à la reprise de la charge, en en faisant donc un véritable ressort de suspension, on constate qu'il devient difficile de préserver leurs qualités habituelles de filtrage. Ainsi, une véritable concentration dans le même élément des fonctions de ressort de suspension et de filtrage apparaît problématique.

L'invention propose une configuration et une disposition d'articulations de suspension qui permet de combiner de bonnes qualités de filtrage avec la capacité à porter la charge du véhicule tout en conférant une bonne élasticité de suspension. Les performances de filtrage des articulations élastiques ainsi conçues et implantées sont telles que, dans certains cas, il s'avère possible de ne pas ajouter d'autres blocs de caoutchouc à des fins de filtrage.

L'invention permet ainsi de proposer un essieu dont la réalisation soit aussi simple que possible, tout en, grâce à l'intégration de fonctions qu'il réalise, facilitant le montage de l'essieu sur le véhicule.

L'invention propose un essieu pour véhicule, ledit véhicule comportant une caisse suspendue, ledit essieu comportant deux bras de suspension et une traverse, lesdits bras étant destinés à être reliés chacun à un arbre définissant un axe d'articulation dudit bras par rapport à la caisse, lesdits bras portant une fusée destinée à recevoir une roue, ladite traverse reliant lesdits bras et autorisant un débattement relatif desdits bras de suspension, ledit essieu comportant en outre au moins deux supports ayant des surfaces de référence pour le montage sur ladite caisse, une articulation élastique de suspension étant intercalée entre chaque support et l'arbre correspondant, ladite articulation élastique comportant un manchon en matière élastomérique qui est solidaire sans glissement à la fois du support et dudit arbre correspondants, ladite articulation élastique comportant au moins une alvéole positionnée dans l'articulation élastique de façon à définir un axe de référence, perpendiculaire à l'axe d'articulation, la raideur radiale de ladite articulation étant minimale le long dudit axe de référence, ledit axe d'articulation dudit bras par rapport à la caisse étant orienté sensiblement parallèlement à l'axe de rotation de la roue défini par la fusée.

Dans une variante avantageuse, ledit axe de référence est orienté sensiblement perpendiculairement au plan horizontal de repère lié à la caisse du véhicule. Notons que l'on entend ici par "plan horizontal de repère lié à la caisse" le plan qui se déplace parallèlement au sol pendant le roulage du véhicule dans des conditions normales. Quant à l'articulation de suspension, celle-ci étant destinée à fonctionner en torsion autour d'un axe d'articulation, on entend par "raideur radiale" la raideur de l'articulation dans n'importe quelle direction perpendiculaire audit axe d'articulation, c'est à dire dans n'importe quelle direction radiale. Dans la présente invention, l'articulation élastique n'étant pas isotrope, la valeur de la raideur dépend de l'orientation de l'articulation élastique. On appelle "axe de référence" la direction radiale le long de laquelle la raideur radiale est minimale.

Les articulations élastiques formant des ressorts de suspension intégrés à l'essieu, celui-ci comporte une "surface de référence pour le montage sur ladite caisse", c'est à dire une ou plusieurs portées qui, au montage, viennent en contact avec ladite caisse, et par la ou lesquelles l'essieu est fixé à la caisse, la transmission des efforts entre caisse et essieu passant par la ou lesdites portées. Cette surface de référence permet, sur l'essieu isolé, de retrouver le plan horizontal de repère dont il a été question ci-dessus.

L'invention sera mieux comprise par la description qui va suivre, données à titre non limitatif, et sont illustrée par le dessin annexé sur lequel:
la figure 1 est une vue de côté d'un essieu selon l'invention,
la figure 2 est une vue en plan du même essieu,
la figure 3 est une vue d'une articulation élastique utilisée dans l'essieu selon l'invention,
la figure 4 est une coupe selon les plans de coupe repérés par CC à la figure 3.

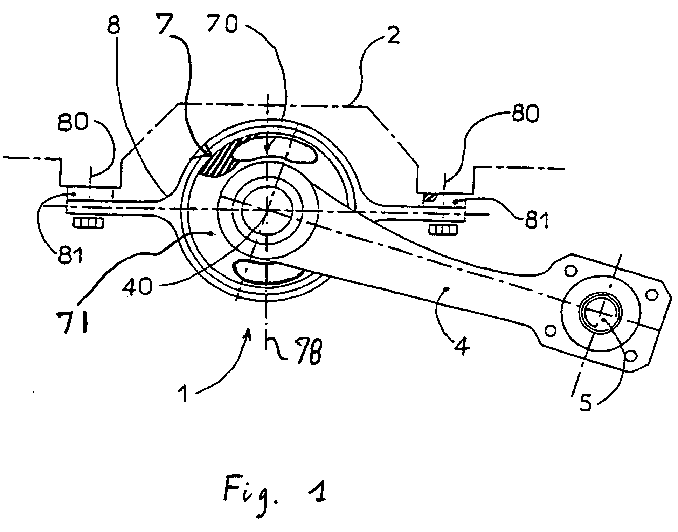

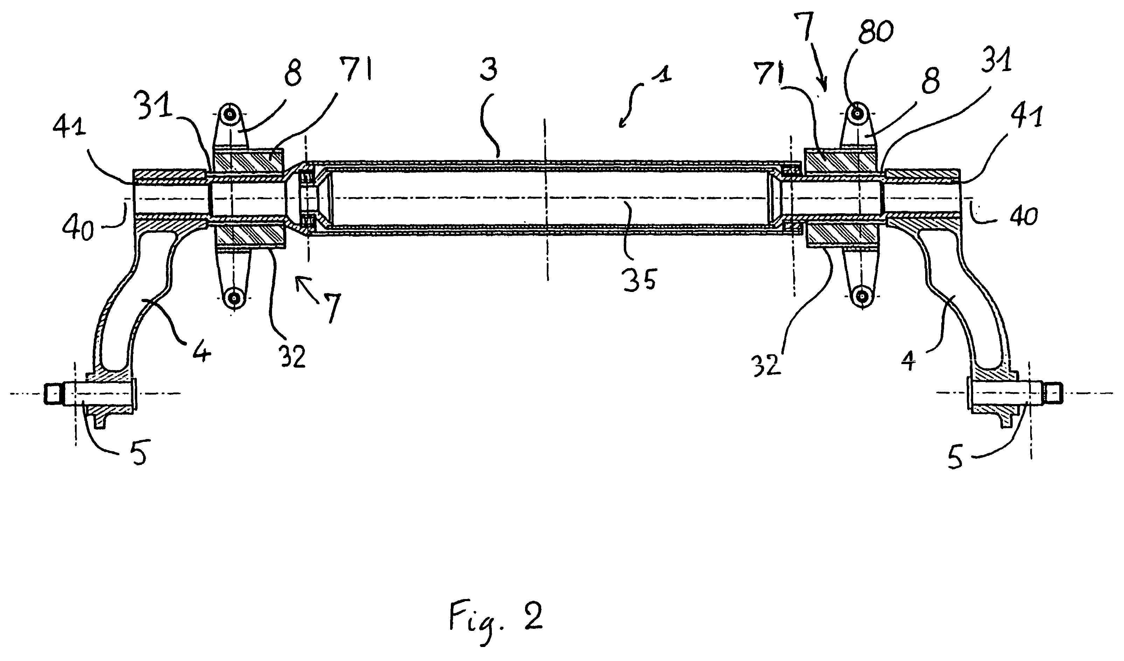

En consultant en parallèle les figures 1 et 2, on aperçoit un essieu 1, destiné à être monté sur la caisse 2 d'un véhicule par l'intermédiaire de supports 8 formant quatre points 80 de fixation à la caisse, éventuellement par l'intermédiaire de blocs de caoutchouc 81. Notons que ces supports, qui ici sont deux pièces indépendantes, pourraient fort bien faire partie d'un berceau unique, monté lui-même sur la caisse. L'essieu 1 comporte une traverse 3, reliant deux bras de suspension 4. Les bras de suspension sont montés directement sur la traverse 3 au niveau de leur axe d'articulation 40 (c'est à dire leur axe de débattement par rapport à la caisse 2 du véhicule). Dans le cas particulier décrit ici, l'axe d'articulation 40 des bras 4 par rapport à la caisse et l'axe 35 de la traverse 3 sont confondus.

Les bras de suspension 4 portent une fusée 5 du côté opposé à l'axe d'articulation 40. Chaque fusée 5 est destinée à recevoir une roue. On voit à la figure 2 que la traverse reliant les deux bras forme avec ceux-ci une figure en U. La traverse 3 en elle-même est constituée comme décrit dans la demande précitée WO97/47486; le lecteur est donc invité à se reporter à ce document pour plus d'informations sur la traverse elle-même.

L'essieu illustré aux différentes figures intègre la fonction suspension. Des articulations élastiques 7 de suspension entourent chacun des arbres 41 sur lesquels elles sont montées sans rotation relative possible. Les mêmes articulations élastiques 7 sont montés par ailleurs sur le support 8, également sans rotation relative possible. Les articulations élastiques 7 forment des ressorts de torsion, par lesquels peut se transmettre le poids du véhicule. Les articulations élastiques sont réalisées en caoutchouc.

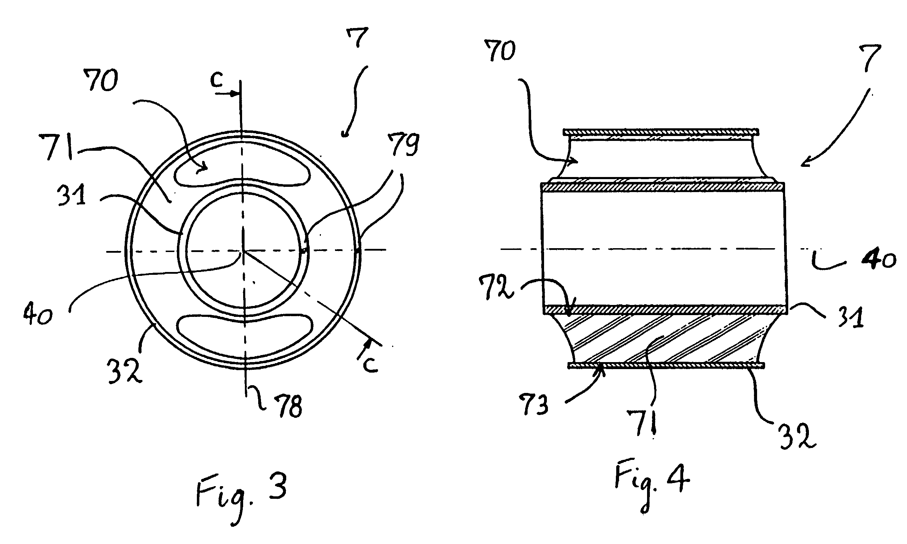

A la figure 3, on a représenté l'une de ces articulations élastiques 7, qui sont identiques de part et d'autre de l'essieu 1. Une articulation élastique 7 est un palier constitué essentiellement d'un manchon 71 en matière élastomérique disposé entre une armature intérieure 31 et une armature extérieure 32, solidarisé sans glissement possible sur ces armatures, par exemple par la technique connue d'adhérisation. Les armatures extérieures comportent des surfaces de référence pour le montage sur ladite caisse. Le manchon 71 comporte deux alvéoles 70 diamétralement opposées. Au moins une des alvéoles (ici les deux) est débouchante à l'une des faces latérales du manchon 71. Ici, les alvéoles sont traversantes, c'est à dire qu'elles débouchent aux deux faces latérales du manchon 71. Aux figures 1 et 3, les alvéoles 70 ont l'allure qu'elle prennent lorsque l'articulation élastique porte la charge nominale pour laquelle elle est conçue. La position de la ou des alvéoles 70 définit un axe de référence 78 le long duquel la raideur radiale est minimale. Cela signifie que, pour un niveau donné d'une sollicitation qui tend à déplacer l'armature intérieure 31 en translatant l'axe 40 parallèlement à lui même alors que l'armature extérieure 32 est immobile, le déplacement sera le plus grand si la sollicitation est orientée parallèlement à l'axe de référence 78.

Bien entendu, les articulations élastiques 7 sont azimutées de sorte que l'axe de référence 78 est orienté sensiblement verticalement, c'est à dire sensiblement perpendiculairement au plan horizontal lié à la caisse 2 du véhicule. De façon inattendue, c'est dans cette position que les performances en filtrage acoustique s'avère les meilleures. Quant à la sensibilité du positionnement de l'axe de référence, il semble que l'orientation dudit axe de référence doive de préférence être comprise entre des limites valant +45° et -45° par rapport à une perpendiculaire audit plan horizontal.

Par ailleurs, on voit que la largeur de la face radialement intérieure 72 de chaque manchon 71 est plus grande que la largeur de la face radialement extérieure 73 dudit manchon.

L'invention trouve application en particulier comme train arrière d'un véhicule de tourisme, de gammes petites et moyennes. L'invention permet de supprimer les ressorts hélicoïdaux ou les barres de torsion habituellement utilisés comme ressort de suspension. On peut bien entendu concevoir différentes variantes et adaptations, comme par exemple ajouter un élément contribuant aussi à la reprise de la charge du véhicule et agissant en parallèle de l'articulation élastique 7, comme par exemple un ressort pneumatique chargé d'assurer les compensations nécessaires pour assurer à la caisse une garde au sol constante quelle que soit la charge. Cependant, les articulations élastiques 7 sont ici véritablement des éléments contribuant substantiellement à la reprise de la charge totale supportée par la roue considérée, contrairement aux blocs de caoutchouc que l'on rencontre couramment, qui n'ont qu'un rôle de filtrage et de guidage, et dont la contribution à la reprise de la charge est négligeable (de l'ordre quelques pour-cent) et dont la contribution à la reprise de la charge n'intervient pas dans le dimensionnement. Bien qu'il soit difficile de quantifier dans l'absolu cette contribution minimale à la reprise de la charge due aux articulations élastiques, on peut pour fixer les idées considérer qu'elle sera en tout état de cause bien supérieure à 10%.

Du fait de la fonction ressort de suspension assurée par les articulations 7 décrites, lorsqu'on les monte dans l'essieu, elles comportent une précharge à l'instar des ressorts métalliques (barres de torsion ou ressorts hélicoïdaux) de suspension d'un véhicule. En général, il existe encore une précharge même lorsque le véhicule est sur un pont élévateur ou sur cric, roues pendantes. Ceci distingue de tels éléments d'articulations classiques dont la participation à la reprise de la charge négligeable, n'intervient absolument pas dans le dimensionnement. Les articulations pures, c'est à dires celles ne jouant pas le rôle d'un ressort, sont montées sans précharge. Dès lors, sous un autre aspect, l'invention s'étend aussi à un élément formant articulation élastique de suspension et ressort de torsion, comportant un manchon 71 en matière élastomérique disposé entre une armature intérieure 31 et une armature extérieure 32, solidarisé sans glissement possible sur ces armatures, lesdites armatures extérieures et intérieures comportant des surfaces de référence pour le montage sur une pièce rigidement liée à ladite caisse et sur une pièce rigidement liée à un bras de suspension, caractérisé en ce que le manchon 71 comporte au moins une alvéole 70 et des moyens pour repérer la précontrainte à appliquer au manchon 71 à la position de charge nominale. On peut utiliser des marquages 79 comme montré à la figure 3, qui doivent être alignés à la charge nominale, ou bien toute disposition de but équivalent. Bien entendu, les caractéristiques relatives aux alvéoles décrites ci-dessus, à la constitution du manchon 71, s'appliquent aussi à un tel élément 70.

## Revendications

1. Essieu (1) pour véhicule, ledit véhicule comportant une caisse suspendue, ledit essieu (1) comportant deux bras (4) de suspension et une traverse (3), lesdits bras (4) étant destinés à être reliés chacun à un arbre (41) définissant un axe (40) d'articulation dudit bras (4) par rapport à la caisse, lesdits bras (4) portant une fusée (5) destinée à recevoir une roue, ladite traverse (3) reliant lesdits bras (4) et autorisant un débattement relatif desdits bras (4) de suspension, ledit essieu comportant en outre au moins deux supports (8) ayant des surfaces de référence pour le montage sur ladite caisse, une articulation élastique de suspension (7) étant intercalée entre chaque support (8) et l'arbre (41) correspondant, ladite articulation élastique (7) comportant un manchon (71) en matière élastomérique qui est solidaire sans glissement à la fois du support (8) et dudit arbre (41) correspondants, les mouvements relatifs entre ledit arbre (41) et ledit support (8) étant absorbés par déformation interne audit manchon (71), ledit axe (40) d'articulation dudit bras (4) par rapport à la caisse étant orienté sensiblement parallèlement à l'axe de rotation de la roue défini par la fusée (5), **caractérisé en ce que** ledit manchon (71) comporte au moins une alvéole (70) positionnée dans l'articulation élastique (7) de façon à définir un axe de référence (78) perpendiculaire à l'axe d'articulation (40) et déterminé lorsque l'essieu porte sa charge nominale, la raideur radiale de ladite articulation étant minimale le long dudit axe de référence, ledit axe de référence (78) étant orienté sensiblement perpendiculairement au plan horizontal de repère lié à la caisse du véhicule.

2. Essieu selon la revendication 1, dans lequel au moins une alvéole (70) est débouchante à l'une des faces latérales du manchon (71).

3. Essieu selon la revendication 2, dans lequel la ou les alvéoles (70) sont traversantes.

4. Essieu selon l'une des revendications précédentes, comportant deux alvéoles opposées l'une à l'autre par rapport à l'axe d'articulation.

5. Essieu selon l'une des revendications précédentes, dans lequel lesdits manchons (71) sont en caoutchouc.

6. Essieu selon l'une des revendications précédentes, dans lequel la largeur de la face radialement intérieure (72) de chaque manchon (71) est plus grande que la largeur de la face radialement extérieure (73) dudit manchon.

7. Essieu selon l'une des revendications précédentes, dans lequel la contribution de ladite articulation élastique à la reprise de la charge supportée par ladite roue est supérieure à 10% de la charge totale supportée par la roue associée.

8. Essieu selon l'une des revendications précédentes, dans lequel la ladite articulation élastique assure l'intégralité de la reprise de la charge supportée par la roue associée.

9. Elément formant articulation élastique de suspension et ressort de torsion, comportant un manchon (71) en matière élastomérique disposé entre une armature intérieure (31) et une armature extérieure (32), solidarisé sans glissement possible sur ces armatures, lesdites armatures extérieures et intérieures comportant des surfaces de référence pour le montage sur un pièce rigidement liée à ladite caisse et sur une pièce rigidement liée à un bras de suspension, **caractérisé en ce que** le manchon (71) comporte au moins une alvéole (70) et des marquages (79) pour repérer la précontrainte à appliquer au manchon (71) à la position de charge nominale.

10. Elément selon la revendication 9, dans lequel au moins une alvéole (70) est débouchante à l'une des faces latérales du manchon (71).

11. Elément selon la revendication 9 ou 10, dans lequel la ou les alvéoles (70) sont traversantes.

12. Elément selon l'une des revendications 9 à 11, comportant deux alvéoles opposées l'une à l'autre par rapport à l'axe d'articulation.

13. Elément selon l'une des revendications 9 à 12, dans lequel lesdits manchons (71) sont en caoutchouc.

14. Elément selon l'une des revendications 9 à 13, dans lequel la largeur de la face radialement intérieure (72) de chaque manchon (71) est plus grande que la largeur de la face radialement extérieure (73) dudit manchon.

## Patentansprüche

1. Fahrzeugachse (1), wobei das Fahrzeug einen aufgehängten Aufbau aufweist, wobei die Fahrzeugachse (1) zwei Aufhängungsarme (4) und eine Querstrebe (3) aufweist, wobei die Arme (4) dazu bestimmt sind, je mit einer Welle (41) verbunden zu werden, die eine Gelenkachse (40) des Arms (4) in Bezug auf den Aufbau definiert, wobei die Arme (4) einen Achsschenkel (5) tragen, der ein Rad aufnehmen soll, wobei die Querstrebe (3) die Arme (4) verbindet und eine relative Ausfederung der Aufhängungsarme (4) erlaubt, wobei die Fahrzeugachse außerdem mindestens zwei Träger (8) aufweist, die Bezugsflächen für die Befestigung am Aufbau haben, wobei ein elastisches Aufhängungsgelenk (7) zwischen jeden Träger (8) und die entsprechende Welle (41) eingesetzt ist, wobei das elastische Gelenk (7) eine Muffe (71) aus Elastomermaterial aufweist, die gleitfrei sowohl mit dem entsprechenden Träger (8) als auch mit der entsprechenden Welle (41) fest verbunden ist, wobei die relativen Bewegungen zwischen der Welle (41) und dem Träger (8) durch innere Verformung der Muffe (71) absorbiert werden, wobei die Gelenkachse (40) des Arms (4) in Bezug auf den Aufbau im wesentlichen parallel zur Drehachse des Rads ausgerichtet ist, die vom Achsschenkel (5) definiert wird, **dadurch gekennzeichnet, dass** die Muffe (71) mindestens eine Aushöhlung (70) aufweist, die im elastischen Gelenk (7) so positioniert ist, dass sie eine Bezugsachse (78) definiert, die senkrecht zur Gelenkachse (40) liegt und bestimmt wird, wenn die Fahrzeugachse ihre Nennlast trägt, wobei die radiale Steifheit des Gelenks entlang der Bezugsachse minimal ist, wobei die Bezugsachse (78) im wesentlichen senkrecht zur waagrechten Bezugsebene ausgerichtet ist, die mit dem Fahrzeugaufbau verbunden ist.

2. Fahrzeugachse nach Anspruch 1, bei der mindestens eine Aushöhlung (70) in eine der Seitenflächen der Muffe (71) mündet.

3. Fahrzeugachse nach Anspruch 2, bei der die Aushöhlung(en) (70) durchgehend ist (oder sind).

4. Fahrzeugachse nach einem der vorhergehenden Ansprüche, die zwei einander in Bezug auf die Gelenkachse gegenüberliegende Aushöhlungen aufweist.

5. Fahrzeugachse nach einem der vorhergehenden Ansprüche, bei dem die Muffen (71) aus Kautschuk sind.

6. Fahrzeugachse nach einem der vorhergehenden Ansprüche, bei der die Breite der radial inneren Fläche (72) jeder Muffe (71) größer ist als die Breite der radial äußeren Fläche (73) der Muffe.

7. Fahrzeugachse nach einem der vorhergehenden Ansprüche, bei der der Beitrag des elastischen Gelenks zur Übernahme der vom Rad getragenen Last größer ist als 10 % der Gesamtlast, die vom zugeordneten Rad getragen wird.

8. Fahrzeugachse nach einem der vorhergehenden Ansprüche, bei der das elastische Gelenk die Gesamtheit der Übernahme der vom zugeordneten Rad getragenen Last gewährleistet.

9. Element, das ein elastisches Aufhängungsgelenk und eine Verdrehungsfeder bildet, mit einer Muffe (71) aus Elastomermaterial, die zwischen einer inneren Bewehrung (31) und einer äußeren Bewehrung (32) angeordnet und ohne Gleitmöglichkeit an diesen Bewehrungen befestigt ist, wobei die äußeren und inneren Bewehrungen Bezugsflächen für die Montage auf ein steif mit dem Aufbau verbundenes Bauteil und auf ein steif mit einem Aufhängungsarm verbundenes Bauteil aufweisen, **dadurch gekennzeichnet, dass** die Muffe (71) mindestens eine Aushöhlung (70) und Markierungen (79) aufweist, um die an die Muffe (71) in der Position der Nennlast anzulegende Vorspannung zu markieren.

10. Element nach Anspruch 9, bei dem mindestens eine Aushöhlung (70) an einer der Seitenflächen der Muffe (71) mündet.

11. Element nach Anspruch 9 oder 10, bei dem die Aushöhlung(en) (70) durchgängig ist (oder sind).

12. Element nach einem der Ansprüche 9 bis 11, das zwei in Bezug auf die Gelenkachse einander gegenüberliegende Aushöhlungen aufweist.

13. Element nach einem der Ansprüche 9 bis 12, bei dem die Muffen (71) aus Kautschuk sind.

14. Element nach einem der Ansprüche 9 bis 13, bei dem die Breite der radial inneren Fläche (72) jeder Muffe (71) größer ist als die Breite der radial äußeren Fläche (73) der Muffe.

## Claims

1. A vehicle axle (1), said vehicle comprising a suspended body, said axle (1) comprising two suspension arms (4) and a cross-member (3), each of said arms (4) being intended to be coupled to a shaft (41) defining a pivot axis (40) of said arm (4) relative to the body, said arms (4) bearing a stub axle (5) intended to receive a wheel, said cross-member (3) coupling said arms (4) and allowing a relative clearance of said suspension arms (4), said axle further comprising at least two supports (8) having reference surfaces for mounting on said body, a flexible suspension joint (7) being inserted between each support (8) and the corresponding shaft (41), said flexible joint (7) comprising a sleeve (71) of elastomeric material which is integral, without sliding, with both the corresponding support (8) and said corresponding shaft (41), the relative movements between said shaft (41) and said support (8) being absorbed by deformation internal to said sleeve (71), said pivot axis (40) of said arm (4) relative to the body being oriented substantially parallel to the axis of rotation of the wheel defined by the stub axle (5), **characterised in that** said sleeve (71) comprises at least one hole (70) positioned in the flexible joint (7) so as to define a reference axis (78) perpendicular to the pivot axis (40) and determined when the axle bears its rated load, the radial rigidity of said joint being minimal along said reference axis, said reference axis (78) being oriented substantially perpendicular to the horizontal plane of reference coupled to the body of the vehicle.

2. An axle according to Claim 1, in which at least one hole (70) opens out onto one of the lateral faces of the sleeve (71).

3. An axle according to Claim 2, in which the hole(s) (70) is/are traversing.

4. An axle according to one of the preceding claims, comprising two holes opposite each other relative to the pivot axis.

5. An axle according to one of the preceding claims, in which said sleeves (71) are made of rubber.

6. An axle according to one of the preceding claims, in which the width of the radially inner face (72) of each sleeve (71) is greater than the width of the radially outer face (73) of said sleeve.

7. An axle according to one of the preceding claims, in which the contribution of said flexible joint to takeup of the load supported by said wheel is greater than 10% of the total load supported by the associated wheel.

8. An axle according to one of the preceding claims, in which said flexible joint takes up the entire load supported by the associated wheel.

9. An element forming a flexible suspension joint and torsion spring, comprising a sleeve (71) of elastomeric material arranged between an inner frame (31) and an outer frame (32), integrated without possible sliding on these frames, said outer and inner frames comprising reference surfaces for mounting on a part rigidly coupled to said body and onto a part rigidly coupled to a suspension arm, **characterised in that** the sleeve (71) comprises at least one hole (70) and markings (79) for marking the prestressing to be applied to the sleeve (71) in the nominal load position.

10. An element according to Claim 9, in which at least one hole (70) opens out onto one of the lateral faces of the sleeve (71).

11. An element according to Claim 9 or 10, in which the hole(s) (70) is/are traversing.

12. An element according to one of Claims 9 to 11, comprising two holes opposite each other relative to the pivot axis.

13. An element according to one of Claims 9 to 12, in which said sleeves (71) are made of rubber.

14. An element according to one of Claims 9 to 13, in which the width of the radially inner face (72) of each sleeve (71) is greater than the width of the radially outer face (73) of said sleeve.
